# EUROPEAN PATENT APPLICATION

(11) **EP 1 681 081 A1**
(43) Date of publication of application: **19.07.2006**
(21) Application number: 04772470.3
(22) Date of filing: 31.08.2004
(51) Int. Cl.: A63F 9/00

(54) **GAME SYSTEM**

(30) Priority: 10.09.2003 JP 2003318931
(71) Applicant: SEGA CORPORATION, Ohta-ku, Tokyo 144-8531 (JP)
(72) Inventor: UEDA, Noriaki, ku, Tokyo 144-8531 (JP); KITAMURA, Kenya, Tokyo 144-8531 (JP); ISHIKAWA, Masami, Tokyo 144-8531 (JP); NAMIKI, Ryuji, Tokyo 144-8531 (JP); KURATSUJI, Toshiyuki, Tokyo 144-8531 (JP); SAWAI, Hirofumi, Tokyo 144-8531 (JP); WATANABE, Katsuyoshi, Tokyo 144-8531 (JP); KUSAJIMA, Chisaki, SEGA AMUSEMENT Co., Ltd., Tokyo 144-8532 (JP); MIYAMOTO, Junichi, SEGA AMUSEMENT Co., Ltd., Tokyo 144-8532 (JP); FUJIKI, Shuhei, SEGA AMUSEMENT Co., Ltd., Tokyo 144-8532 (JP); EHARA, Takatsugu, SEGA AMUSEMENT Co., Ltd., Tokyo 144-8532 (JP); OKUNOKI, Yutaka, Tokyo 144-8531 (JP)
(74) Representative: Brown, Kenneth Richard
(86) International application number: PCT/JP2004/012514
(87) International publication number: WO 2005/025703

(57) **Abstract**

[Problems] A player's operation is simplified to the utmost, and player's will is sufficiently confirmed and player's safety is secured.

[Means for Solving Problems]

A robbery damage of the electronic money storage medium (EDY) is prevented because the electronic money terminal (EDYT1) reads the electronic money storage medium (EDY) when the electronic money storage medium (EDY) is deeply inserted into the insert space 601.

The electronic money terminal (EDYT1) is provided with a credit button (602) which is push before the game is starts the game machine. Therefore, the player's will can be confirmed.

## Description

### Technical Field

The present invention relates to a game system using an electronic money.

### Background Technology

Recently, the time of practical use of electronic money is coming. Game systems are proposed, for example in the patent document 1, for downloading games onto game machines by electronic money.

However, as for the game machine of the patent document 1, it is necessary to store in the electronic money information concerning games, so general purpose electronic money is not applicable.
Since the electronic money communicates with a reader through radio communication, it is necessary to perfectly prevent game from starting against players' will in an environment of a lot of players having electronic money and playing arcade games etc. On the other hand, a procedure for starting a game should be as simple as possible. However, there is nothing prepared for these requirement in the game machine of the patent document 1.

Patent Document 1: Kokai publication 2002-282555

### Disclosure of the Invention

### Problems to be Solved by the Invention

The present invention is invented from the background above, and has an object to simplify player' s operation to the utmost, to sufficiently confirm player' s will and to secure player' s safety.

### Effect of the Invention

According to the present invention, the player' s operation is simplified to the utmost, player' s will is sufficiently confirmed and player' s safety is secured.

### Means for Solving Problems

The present invention is a game system which comprises a game machine for executing a game; an electronic money control means for controlling a balance of electronic moneys; an electronic money terminal comprising a reader/ writer means capable of communicating with an electronic money memory medium which stores an information of said electronic money and an execution confirmation means operated by a player when said player executes said game on said game machine using said electronic money; a means for electronic money control and communication capable of communicating with said electronic money control means, capable of ciphering said information of said electronic money read by the reader/ writer means, and capable of transmitting the ciphered information to said electronic money control means; and a game start control means for starting execution of said game, wherein the electronic money control mans informs said balance of said electronic money through said means for electronic money control and communication to said game start control means when said electronic money control means receives said information of said electronic money from said means for electronic money control and communication, and said game start control means starts game execution when said player operates said execution confirmation means and said balance informed from said electronic money control means is not less than a unit price of the game.
Therefore, player's operation is simplified to the utmost, player's will is sufficiently confirmed, and player's safety is secured.
A cash-box may be applicable together with the reader/ writer means for executing the game by using a currency.

In a game system according to the present invention, said electronic money terminal comprises an insert space into which said electronic memory medium is inserted, or comprises a slit into which said electronic memory medium is inserted and a drawing out restricting means for restricting drawing out of said electronic money memory medium during a period from when said electronic money memory medium is inserted into said slit to when said game is terminated, and for permitting drawing out of said electronic money memory medium after said game is terminated.
Therefore, a robbery damage of the electronic money memory medium is prevented, and because the electronic money memory medium is positioned at a predetermined position relative to the reader/ writer means, a good communication condition with the reader/ writer means is secured.
The drawing out restricting means may be of various mode, that is, a means for pulling the electronic money memory medium into the electronic money terminal, a means for locking up the electronic money memory medium within the electronic money terminal, or a means for guarding the electronic money by a shutter etc. and so forth.

In the game system according to the present invention, the reader/ writer means starts communication with said electronic money memory medium after said execution confirmation means is operated.
Therefore, player's will is confirmed and a transaction of the reader/ writer means is lightened.

In the game system according the present, said game system according to Claims from 1 to 4 is characterized in that the electronic money terminal comprises an electronic money memory medium detecting means for detecting said electronic money memory medium existing at a predetermined position relative to said reader/ writer mans and that said reader/ writer means starts communication with said electronic money memory medium after said electronic money memory medium is detected by said electronic money memory medium detecting means.
Therefore, unexpected deduction of the electronic money is prevented. The transaction is lightened if the processing is started under the condition that the electronic money memory medium is detected.
The electronic money medium detecting means may be various detecting means such as an ultra red sensor, visible light sensor, ultra violet sensor, sound wave sensor, weight sensor, mechanical switch etc.

In the game system according the present invention, there are provided one said means for electronic money control and communication and one said game start control means for a plurality of said electronic money terminals, and a switch means is further provided for connecting selectively one of said electronic money terminals to said means for electronic money control and communication and said game start control means. Therefore, number of parts and number of electronic money units to be controlled can be reduced so that the contract fee on each electronic money unit. This is especially advantageous for stores etc. of rather few players.

In the game system according the present invention, there is provided a balance inquiry confirmation mean which is operated by said player when said player inquires said balance of said electronic money, and said balance is displayed during a period when said player operates said balance inquiry confirmation means.
Therefore, the player's will is confirmed concerning the balance inquiry.
Another mode may be applied such that the balance display is alternatively changed from displaying to not displaying and vice versa every when the inquiry confirmation mean is push.
A number of times inquiry confirmation means may be provided which is capable of inquiring the number of times of a game executable by the balance of the electronic money in the similar manner to that of the balance inquiry confirmation means when the number of times is to be inquired, together with the balance inquiry confirmation means or substituting for the balance inquiry confirmation means.
Therefore, the number of times executable by a balance of high price is not leaked to another person, and the player's safety is secured.

In the game system according to the present invention, the electronic money terminal comprises a display means capable of displaying said balance of said electronic money after said electronic money memory medium is detected by said electronic money memory medium detecting means, said display means displays said balance only when said balance is not more than a predetermined value.
Therefore, the balance of high price is not leaked to another person and the player's safety is secured.

In the game system according to the present invention, an electronic money terminal control means may be further provided, which is connected with said plurality of said means for electronic money control and communication. The electronic money terminal control means may integrate and handle information concerning said electronic money informed through said means for electronic money control and communication.
Further, a means for electronic money terminal control and integration and handling connected with a plurality of the electronic money terminal control means may be provided. The information concerning the electronic money which is integrated by the electronic money terminal control means may be further integrated by the means for electronic money terminal control and for integration and handling.
The information concerning the electronic money which is integrated by the electronic money terminal control means may be further integrated by the means for electronic money terminal control and for integration and handling.

The present invention is a game machine which comprises a reader/ writer means capable of communicating with an electronic money memory medium which stories an information of said electronic money; a means for electronic money control and communication capable of communicating with said electronic money control means for controlling a balance of said electronic money, and capable of transmitting said information read by said reader/ writer means to said electronic money control means; an execution confirmation means operated by a player when said player tries to execute said game on said game machine using said electronic money; and a game start control means for starting execution of said game, wherein said electronic money control mans informs said balance of said electronic money through said means for electronic money control and communication to said game start control means when said electronic money control means receives said information of said electronic money from said means for electronic money control and communication, and said game start control means starts game execution when said player operates said execution confirmation means and said balance informed from said electronic money control means is not less than a unit price of said game.
Therefore, player's operation is simplified to the utmost, player's will is sufficiently confirmed and player's safety is secured.

The present invention is a game program including program codes executable by a information processing apparatus connected to a reader/ writer means capable of communicating with an electronic money memory medium which stores an information of said electronic money, and connected to a means for electronic money control and communication capable of communicating with said electronic money control means and capable of transmitting said information to said electronic money control means. Said game program comprises an execution confirmation step operated by a player when said player tries to execute a game on said game machine using said electronic money; a step of informing balance of said electronic money through said means for electronic money control and communication to said game start control means when said electronic money control means receives information of said electronic money from said means for electronic money control and communication; and a step that said game start control means starts execution of said game when said player operates said execution confirmation means and said balance informed from said electronic money control means is not less than a unit price of said game.
Therefore, player's operation is simplified to the utmost, player's will is sufficiently confirmed and player's safety is secured.
The information processing apparatus may be a game machine, general purpose computer, handy information terminal and other processing apparatus. The execution confirmation step operated when the player executes the game on the game machine by the electronic money may be omitted.

### The Best Mode for Carrying out the Invention

Next, the best mode for working of the present invention is described with reference to drawings.

### First Embodiment

First, the first embodiment of a game system according to the present invention is described with reference to the drawings.

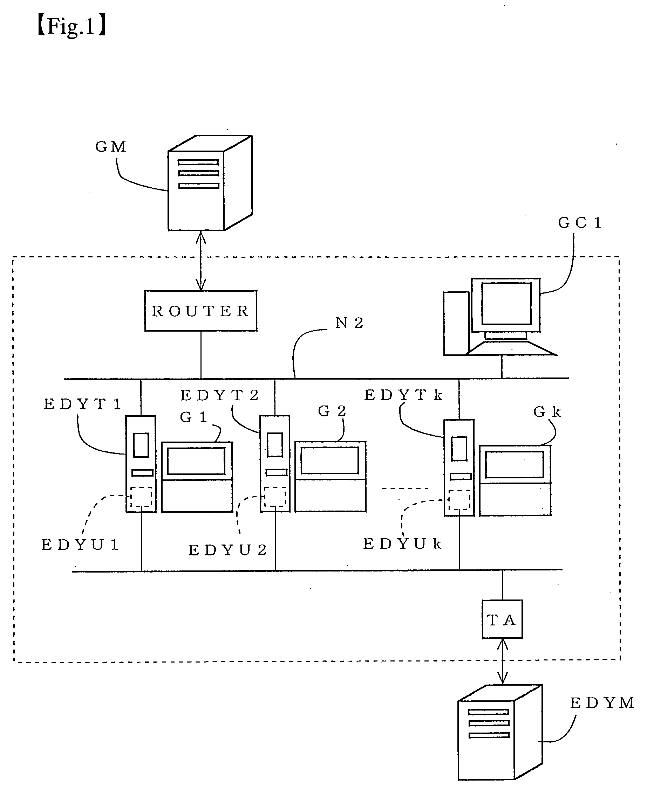

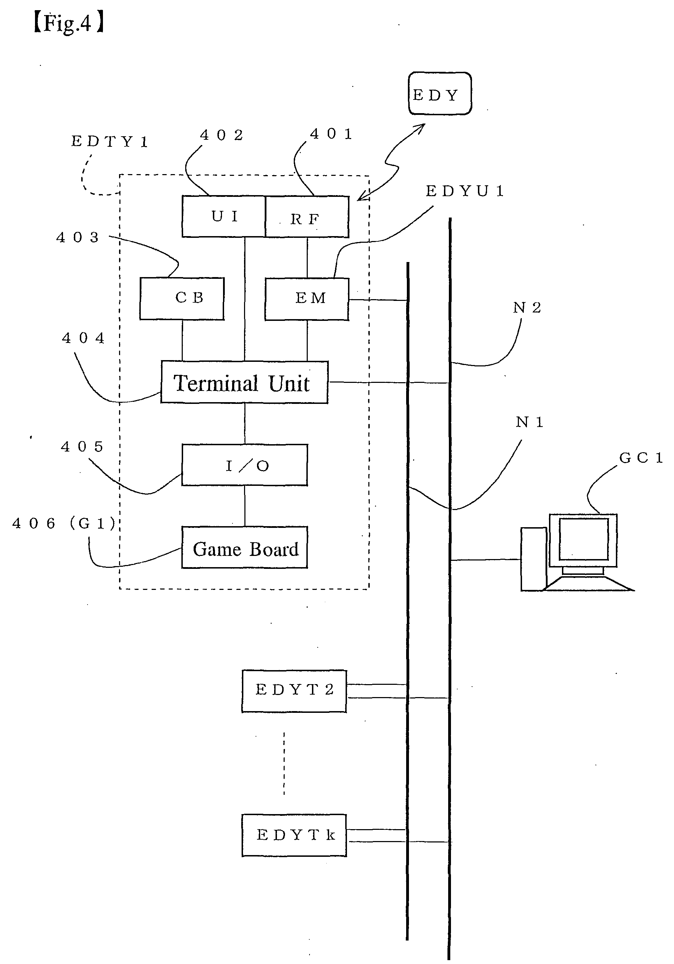

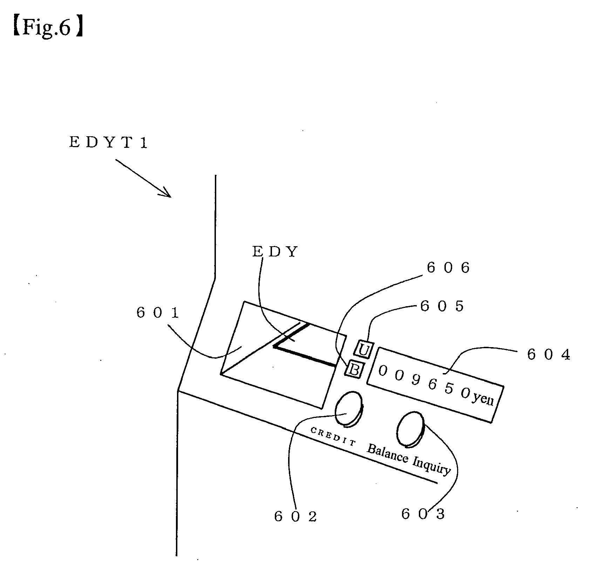

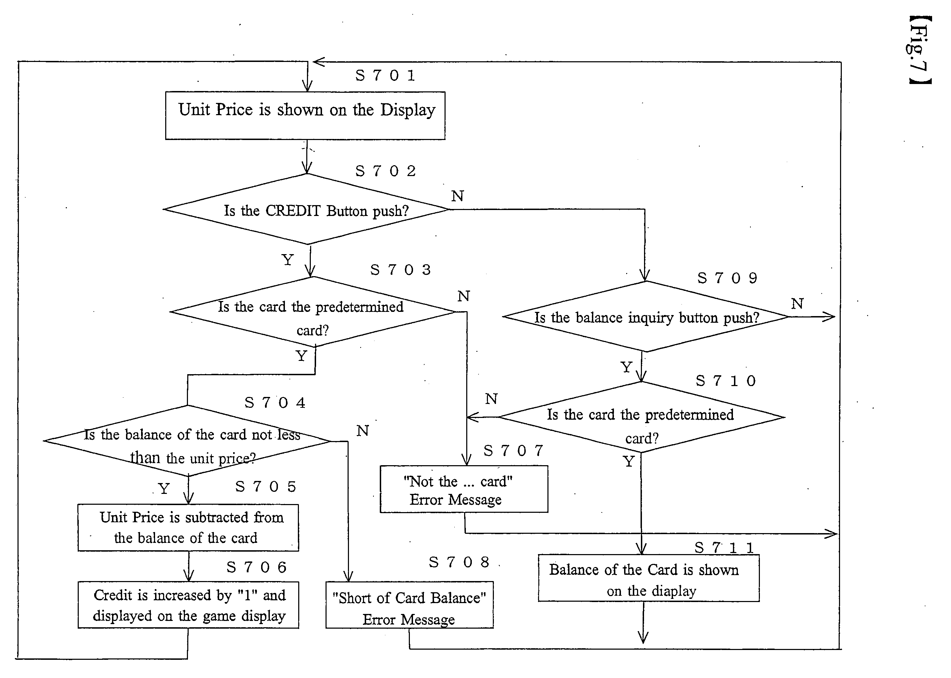

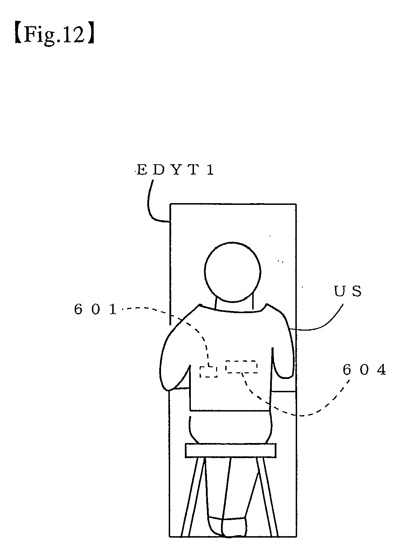

Fig. 1 is a block diagram showing the first embodiment of the game system according to the present invention. Fig. 4 is a block diagram showing an electronic money unit in Fig. 1. Fig. 6 is a perspective view showing an electronic money terminal in Fig. 1. Fig. 7 is a flowchart showing a processing of the electronic money terminal in Fig. 1. Fig. 12 is an elevation view showing positional relationship between the electronic money terminal and a player.

In Fig. 1, a game system includes a plurality of game machines G1, G2, ...., Gk to which electronic money terminals EDYT1, EDYT2, ..., EDYTk are connected, respectively. Each of the electronic money terminals EDYT1, EDYT2, ..., EDYTk is connected through a network N1 to an electronic money control means EDYM.

Each of the electronic money terminals EDYT1, EDYT2, ..., EDYTk includes an electronic money unit (communication means with electronic money control means) EDYU1, EDYU2, ..., EDYUk, respectively, for connecting the electronic money terminals EDYT1, EDYT2, ..., EDYTk to the network N1.

The electronic money units EDYU1, EDYU2, ..., EDYUk cipher and transmit the information of the electronic money read by the reader and the information of the payment of the electronic money terminals EDYT1, EDYT2, ..., EDYTk. to the means for electronic money control EDMY so as to prevent anything dishonest concerning the electronic money.

The means for electronic money control EDMY is a server etc. in a credit company of the electronic money, which controls ID, balance, usage records etc. and gives notices of authentication result and balance of the electronic money read by the reader to the electronic money units EDYU1, EDYU2, ..., EDYUk.

Therefore, the player US (Fig. 12) can start a game on the game machines G1, G2, ..., Gk when he let the electronic money terminals EDYT1, EDYT2, ..., EDYTk read an appropriate electronic money storage medium EDY (Figs. 4 and 6).

Each of the electronic money terminals EDYT1, EDYT2, ..., EDYTk inputs deduction amount of the electronic money read by each terminal to the electronic money units EDYU1, EDYU2, , EDYUk which transmit the amount to the means for electronic money control EDMY. The means for electronic money control EDMY subtracts the received deduction amount from the balance of the electronic money.

The electronic money terminals EDYT1, EDYT2, ..., EDYTk are connected through a network N2 to a store server (means for electronic money terminal control) GC1. The store sever GC1 is connected through a network N2 to a game control means GM.

The store server GC1 controls usage of the game machines G1, G2, , Gk. as well as, the execution record and amount of money of games executed by the electronic moneys applied to the electronic money terminals EDYT1, EDYT2, , EDYTk. The store server GC1 also sums the amount of money up and compares the amount with an amount of money recorded in the means for electronic money control EDYM, if necessary.

In Fig. 6, the electronic money terminal (for example EDYT1) is provided with an insert space 601 for inserting the electronic money storage medium EDY, which is shaped as substantially horizontal tunnel. The electronic money terminal EDYT1 reads the electronic money storage medium EDY when the medium EDY is inserted into the insert space 601.

A robbery damage of the electronic money stage medium EDY is prevented because the electronic money storage medium EDY is used within the space 601, not exposed.

The electronic money storage medium EDY is positioned at a predetermined position relative to a reader/ writer means 401 (Fig. 4), so a good communication condition with the reader/ writer means 401 is secured.

The electronic money terminal EDYT1 is provided with a credit button (execution recognition means) 602, a balance inquiry button 603, a display portion 604, a unit price lamp 605 and a balance lamp 606 adjacent to the insert space 601. The player US pushes the credit button 602 before he is going to start the game on the game machine G1.

The electronic money terminal EDYT1 reads the electronic money storage medium EDY after the credit button 602 is push, and permits the game to be started if the electronic money storage medium EDY is authenticated and the balance is enough for playing the game.

The processing of the electronic money terminal EDYT1 is that the electronic money storage medium EDY is not read until the credit button 602 is push, so a transaction of the electronic money terminal EDYT1 is lightened.

Since the electronic money terminal EDYT1 reads the electronic money storage medium EDY through the radio communication, it is possible that the electronic money terminal EDYT 1 erroneously reads a electronic money storage medium of a player adjacent the electronic money terminal EDYT1 who won't start the game. While, unexpected deduction of the balance is prevented because the player's US will is confirmed by the credit button 602.

When the balance of the electronic money storage medium EDY is to be confirmed, the electronic money storage medium EDY is inserted into the insert space 601 after the balance inquiry button 603 is push. At this time, the processing of game execution is not started. The display portion 604 shows the balance of the electronic money storage medium EDY and the balance lamp 606 lights.

Various modes may be applied such that the balance is shown during the balance inquiry button 603 is continuously push with the electronic money storage medium EDY inserted within the insert space 601, or that the balance display is alternatively changed from displaying to not displaying and vice versa every when the balance inquiry button 603 is push.

As shown in Fig. 12, the insert space and the display portion 604 are positioned in front of the player US using the electronic money terminal EDYT1, so it is uneasy to peep the display portion 604 from behind the player US and it is uneasy to rob the electronic money storage medium within the insert space 601. Therefore, the safety of the player US is improved.

The display portion 604 displays a unit price for one time game (called " 1 credit") executed on the game machine G1 until the processing is executed of reading the electronic money. The unit price lamp 605 lights when the unit price is displayed.

In Fig. 4, the electronic money terminal (for example EDYT1) includes the reader/ writer means 401 connected to the electronic money unit EDYU1. The electronic money terminal (for example EDYT1 communicates with the electronic storage medium EDY through the reader/ writer means 401.

The electronic money terminal EDYT1 includes a terminal board 404 for controlling totally the electronic money terminal EDYT1 and for connecting to the network N2. The electronic money terminal EDYT1 performs the information transmission and reception of information to and from the electronic money unit EDYU1 by means of the terminal board 404.

Therefore, the terminal board 404 inputs the unit price to the electronic money unit EDYU1 and obtains the authentication result and balance from the electronic money unit EDYU1.

The terminal board 404 is connected through an interface 405 with the game board 406 or the game machine G1. The game machine G1 executes a game by controlling the terminal board 404. A game machine may be constructed, in which the electronic money terminal EDYT1 and the game board 406 are integrated.

A cash box 403 is connected to the terminal board 404 so that the game machine G1 can be started by inserting a coin into the cash box 403.

Also, the credit button 602, the balance inquiry button 603, the display portion 604, the unit price lamp 605, the balance lamp and 606 and other user interfaces 402 at the display portion 602 are connected to the terminal board 404.

In Fig. 7, the processing of the electronic money terminal EDYT1 is executed by the following steps.

Step S701: First, the unit price of the game is shown on the display portion 604. When the credit button 602 or the balance inquiry button 603 is push, it is judged in the steps S702 and S709 which is pushed the credit button 602 or the balance inquiry button 603.

Step S702: It is judged whether the credit button 602 is pushed or not. If the credit button is push, the processing is advanced to the step S703, otherwise, to the step S709. When the credit button 602 is push, the electronic money storage medium EDY is expected to be inserted, so a display of blinking the credit button on and off may be performed.

Step S703: The electronic money storage medium EDY is read by the reader/ writer means 401 for judging the electronic money storage medium EDY is a predetermined card or not. If the electronic money storage medium EDY is the predetermined card, the processing is advanced to the step S704, otherwise, to the step S707.

Step S704: It is judged whether the balance of the electronic money is not less than the unit price of the game or not. If the balance is not less than the unit price, the processing is advanced to the step S705, otherwise, to the step S708.

Step S705: A command is given to the electronic money unit EDYU1 to deduct the unit price from the balance. Then the processing is advanced to the step S706.

Step S706: The credit is increased by one for playing the game once, and this is shown on the game display. Then, the processing is returned to the step S701.

Step S707: When the electronic money storage medium EDY is judged in the step S703 to be not the predetermined card, an error " Not the ....Card!" is shown. Then the processing is returned to the step S701.

Step S708: When the balance is judged in the step S704 to be less than the unit price, an error " Short of Card Balance" is shown. Then the processing is returned to the step S701.

Step S709: It is judged whether the balance inquiry button 603 is push or not. If the balance inquiry button 603 is push, the processing is advanced to the step S710, otherwise, returned to the step S701.

Step S710: The electronic money storage medium EDY is read by the reader/writer means 401, and it is judged whether the electronic money storage medium EDY is the predetermined card or not.. If the electronic money storage medium EDY is the predetermined card, the processing is advanced to the step S711, otherwise, to the step S707.

Step S711: The balance is shown on the display portion 604, and the processing is returned to the step S701.

According to the first embodiment, since the will of the player US is confirmed by the credit button 602, unexpected deduction is prevented. The operation for the confirmation is to push the button just once and very simple. Since the player's will to inquire the balance is confirmed by the balance inquiry button 603, the player US can take safety measures for himself such as concealing a high priced balance.

### Second Embodiment

Next, the second embodiment of the game system according to the present invention is described with reference to the drawings.

Fig. 8 is a flowchart showing a processing of the electronic money terminal in the second embodiment of the game system according to the present invention. Fig. 11 is a perspective view showing the electronic money terminal in Fig. 1. Similar or corresponding portions to those in the first embodiment are designated by the same references and descriptions thereof are omitted.

The second embodiment is different in the user interface and the processing of the electronic money terminal from the first embodiment.

In Fig. 11, an electronic money storage medium detecting means 607 such as ultra red sensor is provided within the insert space 601 of the electronic money terminal EDYT1. The balance inquiry button is omitted.

Therefore, it is prevented that the electronic money storage medium EDY is read before inserted and that the electronic money suffers from the unexpected deduction. A condition can be settled that the electronic money terminal EDYT1 starts to read the electronic money after the electronic money EDY is detected. The condition contributes to lighten the transaction of the electronic money terminal EDYT1.

The electronic money medium detecting means may be various detecting means such as a ultra red sensor, visible light sensor, ultra violet sensor, sound wave sensor, weight sensor and mechanical switch.

In the first embodiment., the processing is unexpectedly started if a player stops operation after pushing the credit button 602 at a electronic money terminal, then another player inserts a electronic money storage medium EDY into the insert space 601 of the same electronic money terminal.

In contradistinction to the above, the processing is started on detecting the electronic money medium EDY because the electronic money storage medium EDY is detected by the electronic money storage medium detecting means 607. Therefore, the processing is never started only by inserting the electronic money storage medium EDY into the insert space 601.

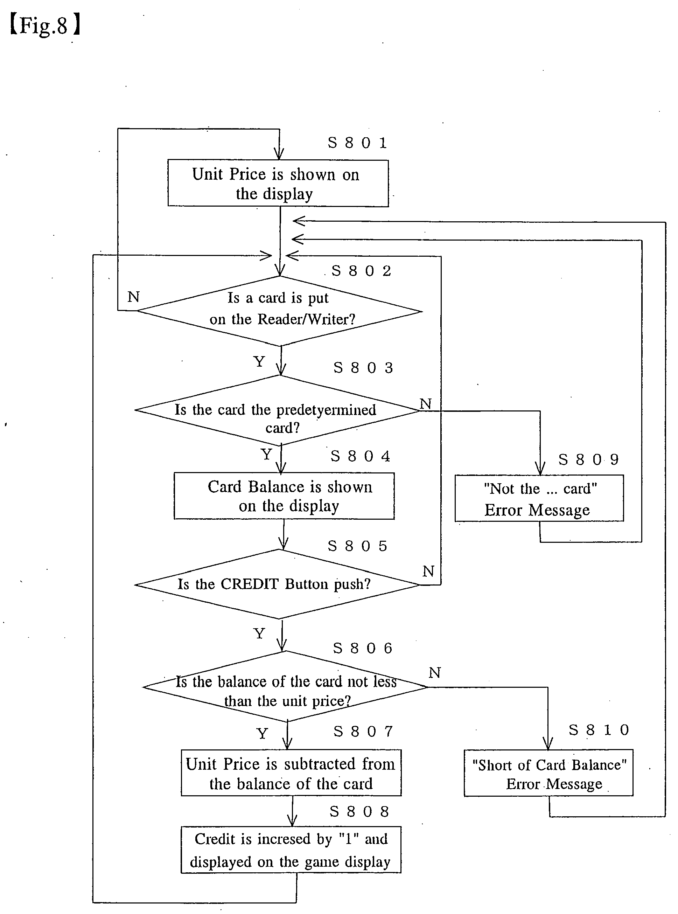

In Fig. 8, the processing of the electronic money terminal is executed by the following steps according to the second embodiment.

Step S801: First, the unit price of the game is shown on the display portion 604, with preparing for inserting of the electronic money storage medium EDY into the insert space 601. In the step S802, It is judged whether the electronic money storage medium EDY is inserted into the insert space 601 or not.

Step S802: .It is judged whether the electronic money storage medium EDY is inserted into the insert space 601 or not. If the electronic money storage medium EDY is inserted, the processing is advanced to the step S803, otherwise, returned to the step S801.

Step S803: The electronic money storage medium EDY is read by the reader/writer means 401 for judging whether the electronic money storage medium EDY is the predetermined card or not. If the electronic money storage medium EDY is the predetermined card, the processing is advanced to the step S804, otherwise, to the step S809.

Step S804: The balance is shown on the display portion 604, then the processing is advanced to the step S805.

Step S805: It is judged whether the credit button 602 is push or not. If the credit button 602 is push, the processing is advanced to the step S806, otherwise, returned to the step S802.

Step S806: It is judged whether the balance of the electronic money is not less than or less than the unit price of the game. If the balance is not less than the unit price, the processing is advanced to the step S807, otherwise, to the step S810.

Step S807: A command is given to the electronic money unit EDYU1 to deduct the unit price from the balance. Then the processing is advanced to the step S 8 0 8 .

Step S 8 0 8 : The credit is increased by one for playing the game once, and this is shown on the game display.

Step S809: When the electronic money storage medium EDY is judged in the step S803 to be not the predetermined card, an error " Not the ....Card!" is shown. Then the processing is returned to the step S802.

Step S810: When the balance is judged in the step S806 to be less than the unit price, an error "Short of Card Balance" is shown. Then the processing is returned to the step S802.

### Third Embodiment

Next, the third embodiment of the game system according to the present invention is described with reference to the drawings.

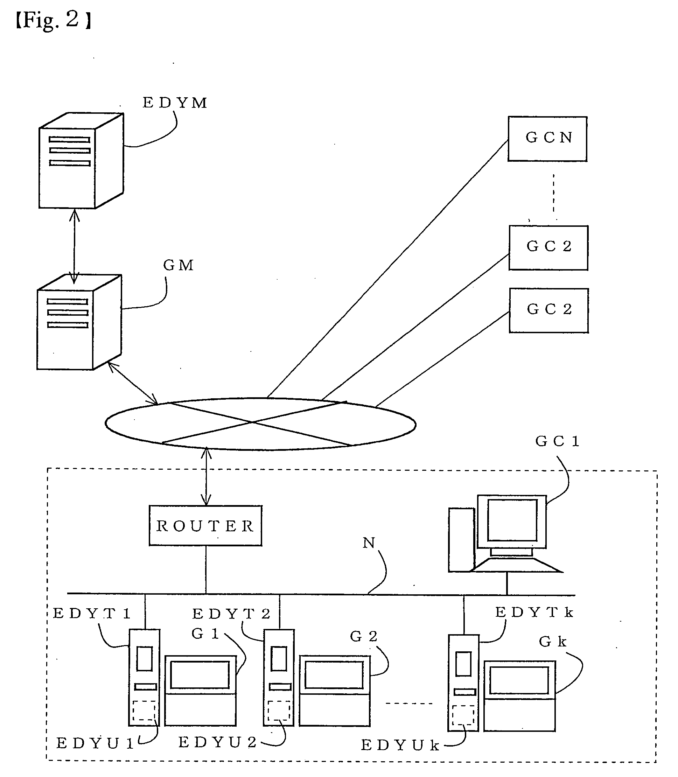

Fig. 2 is a block diagram showing the third embodiment of the game system according to the present invention. Similar or corresponding portions to those in the first embodiment are designated by the same references and descriptions thereof are omitted.

In the third embodiment, the electronic money usage of each store is integrated and handled.

In Fig. 2, the electronic money units EDYU1, EDYU2, , EDYUk of the electronic money terminals EDYT1, EDYT2, , EDYTk are not directly connected to the electronic money control means EDYM but through the network N to the store server GC 1. The network N is common to the network for connecting the electronic money terminals EDYT1, EDYT2, , EDYTk to the game control means GM.

The store server GC1 is connected through a communication means CM1 to the electronic money control means EDYM. The store server GC1 integrates and handles the usage of the electronic money for the total game machines from G1 to Gk and transmits the usage to the electronic money control means EDYM, The electronic money control means EDYM authenticates the electronic money and responds the inquire of the balance through the store server GC1.

According to the third embodiment, the electronic money usage of one store is totally integrated and handled, because the integration is unnecessary of the electronic money usage at each electronic money unit, for the electronic money control means.

### Fourth Embodiment

Next, the fourth embodiment of the game system according to the present invention is described with reference to the drawings.

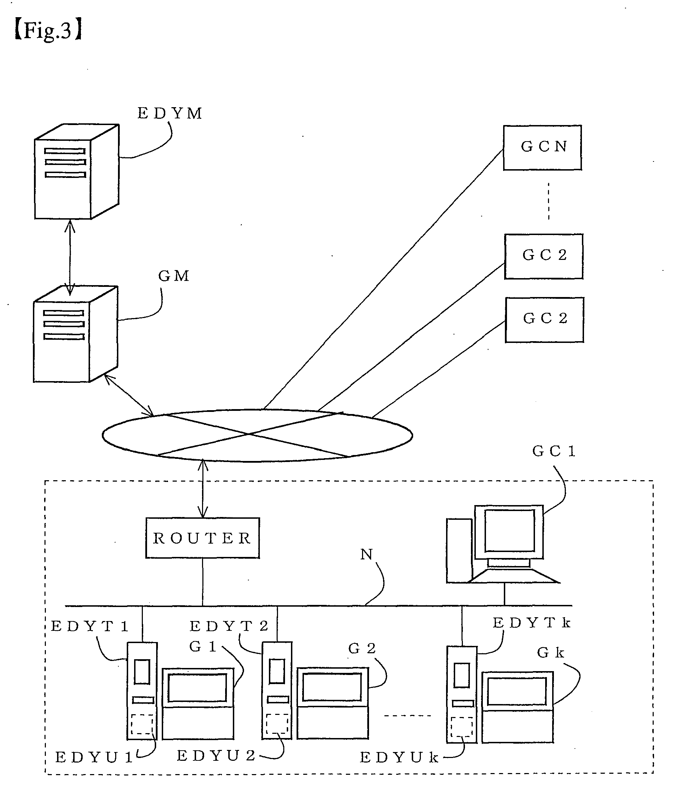

Fig. 3 is a block diagram showing the fourth embodiment of the game system according to the present invention. Similar or corresponding portions to those in the first embodiment are designated by the same references and descriptions thereof are omitted.

In the fourth embodiment, the electronic money usage of a plurality of stores is integrated and handled in a lump.

In Fig. 3, the electronic money units EDYU1, EDYU2, , EDYUk of the electronic money terminals EDYT1, EDYT2, , EDYTk are not directly connected to the electronic money control means EDYM but through the network N to the store server

The store server GC 1 is connected through the network N to the game control means GM. The electronic money control means EDYM is connected through the communication means CM1 to the game control means GM.

The store server GC 1 integrates and handles the usage of the electronic money of all the game machines from G1 to Gk in the store. The game control means GM integrates and handles data of the store severs GC2 to GCN of the plural stores and transmits the data to the electronic money control means EDYM.

On the other hand, the electronic money control means EDYM authenticates the electronic money and responds the inquire of the balance of the electronic money units EDYU1, EDYU2, , EDYUk through the game control means GM and the store servers from GC 1 to GCN.

According to the fourth embodiment, the electronic money usage of the total store can be integrated and handled in a lump because the integration is unnecessary of the electronic money usage at each electronic money unit or at each store, for the electronic money control means.

### Fifth Embodiment

Next, the fifth embodiment of the game system according to the present invention is described with reference to the drawings.

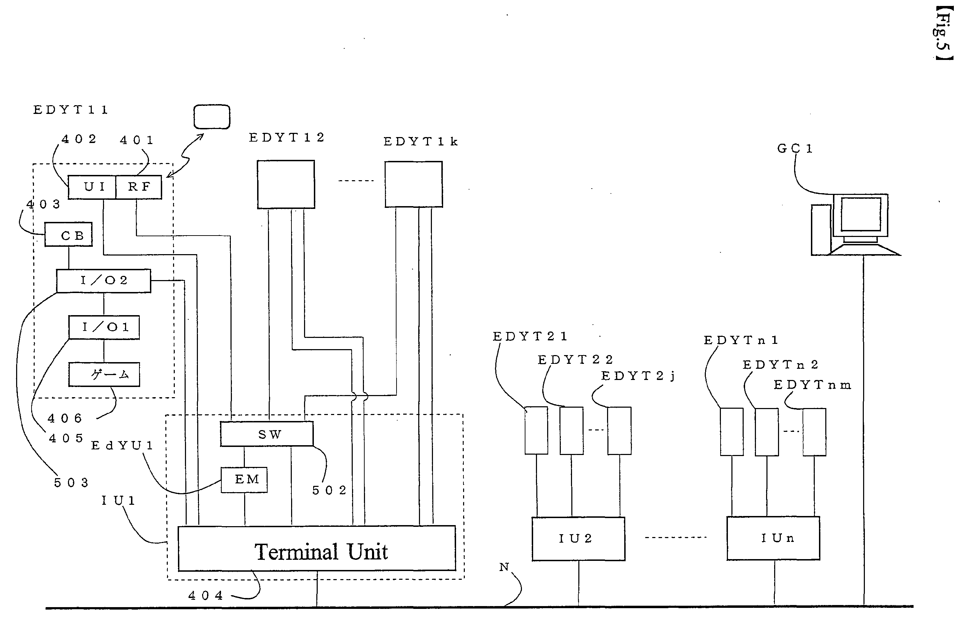

Fig. 5 is a block diagram showing the plural electronic money terminals of the fourth embodiment of the game system according to the present invention. Similar or corresponding portions to those in the first embodiment are designated by the same references and descriptions thereof are omitted.

According to the fifth embodiment, one electronic money unit is commonly used by a plurality of electronic money terminals.

In Fig. 5, a plurality of electronic money terminals EDYT11, EDYT12, , EDYT1k are connected to a integration unit IU1, and a plurality of electronic money terminals EDYT21, EDYT22, , EDYT2j are connected to a integration unit IU2. There are a plurality of combinations (for example n combinations) of plural electronic money terminals and one integration unit. In Fig. 5, the total integration units from IU1 to ILTn are connected through the network N to one store server GC1. However, it is also possible that the electronic money terminals in one store are included in one combination of one integration unit and that the electronic money terminals of a plurality of stores may be included in one combination of one integration unit..

The combination of the integration unit IU1 and the electronic money terminals EDYT11, EDYT12, , EDYT1k (especially EDYT11 among them) are representatively described. The terminal board 404 and electronic money unit EDYU1 of the electronic money terminal EDYT1 in the first embodiment (Fig. 4) are provided in the integration unit IU1, not in the electronic money terminal EDYT1.

The integration unit IU1 includes a switch 502 connected to the electronic money terminals EDYT11, EDYT12, , EDYT1k. One of the electronic money terminals EDYT11, EDYT12, , EDYT1k. is selectively connected to the terminal board 404 and the electronic money unit EDYU1.

The terminal board 404 and electronic money unit EDYU1 in the integration unit IU1 function as the terminal board 404 and electronic money unit EDYU1 for the electronic money terminal connected with. Viewed from the electronic money control means EDYM, the electronic money terminal is deemed as an electronic money terminal within which the terminal board 404 and electronic money unit EDYU1 are incorporated.

Therefore, number of parts and number of electronic money units to be controlled can be reduced so that the contract fee on each electronic money unit. This is especially advantageous for stores etc. of rather few players US.

### Sixth Embodiment

Next, the sixth embodiment of the game system according to the present invention is described with reference to the drawings.

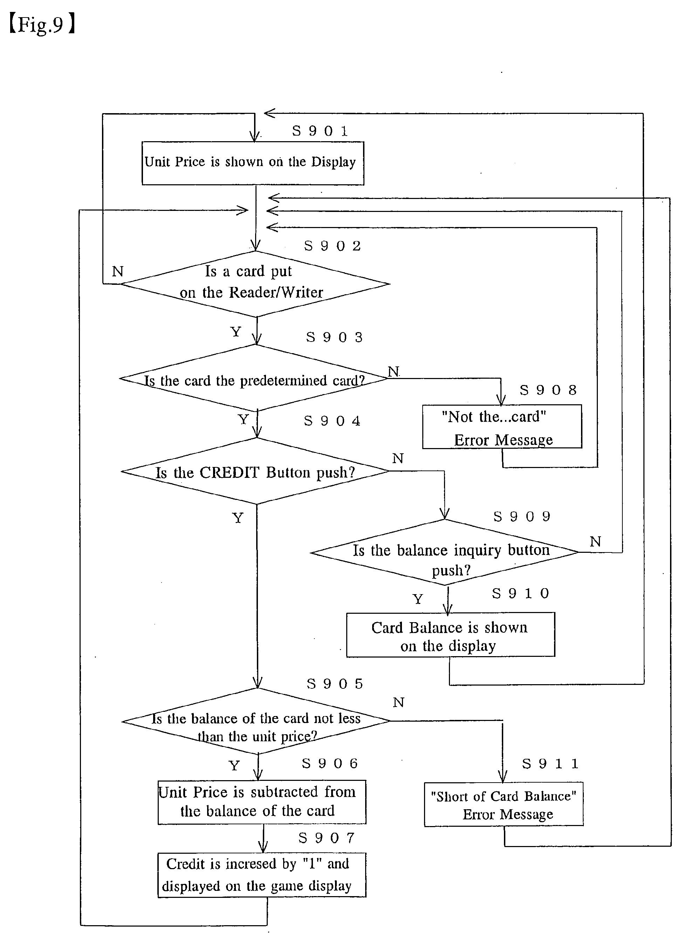

Fig. 9 is a flowchart showing the sixth embodiment of the game system according to the present invention. Similar or corresponding portions to those in the second embodiment are designated by the same references and descriptions thereof are omitted.

According to the sixth embodiment, not only the game execution but also the balance inquiry is executed after the confirmation of the player' s will at the electronic money terminal including the electronic money storage medium detecting means 607.

In Fig. 9, the processing of the electronic money terminal is executed by the following steps according to the sixth embodiment.

Step S901: First, the unit price of the game is shown on the display portion 604, with preparing for inserting of the electronic money storage medium EDY into the insert space 601. In the step S902, it is judged whether the electronic money storage medium EDY is inserted into the insert space 601 or not.

Step S902: .It is judged whether the electronic money storage medium EDY is inserted into the insert space 601 or not. If the electronic money storage medium EDY is inserted, the processing is advanced to the step S903, otherwise, returned to the step S901.

Step S903: The electronic money storage medium EDY is read by the reader/writer means 401 for judging whether the electronic money storage medium EDY is the predetermined card or not. If the electronic money storage medium EDY is the predetermined card, the processing is advanced to the step S904, otherwise, to the step S908.

Step S904: It is judged whether the credit button 602 is push or not. If the credit button 602 is push, the processing is advanced to the step S905, otherwise, to the step S909.

Step S905: It is judged whether the balance of the electronic money is not less than or less than the unit price of the game. If the balance is not less than the unit price, the processing is advanced to the step S906, otherwise, to the step S911.

Step S906: A command is given to the electronic money unit EDYU1 to deduct the unit price from the balance. Then the processing is advanced to the step S907.

Step S907: The credit is increased by one for playing the game once, and this is shown on the game display. Then, the processing is returned to the step S902.

Step S908: When the electronic money storage medium EDY is judged in the step S703 to be not the predetermined card, an error " Not the ....Card!" is shown. Then the processing is returned to the step S902.

Step S909: It is judged whether the balance inquiry button 603 is push or not. If the balance inquiry button 603 is push, the processing is advanced to the step S910, otherwise, returned to the step S902.

Step S910: The balance is shown on the display portion 604, and the processing is returned to the step S902.

Step S911: When the balance is judged in the step S905 to be less than the unit price, an error "Short of Card Balance" is shown. Then the processing is returned to the step S902.

According to the sixth embodiment, high price balance is prevented from leakage to another person because the balance display depends on the player's will. High safety is secured against a robbery.

### Seventh Embodiment

Next, the seventh embodiment of the game system according to the present invention is described with reference to the drawings.

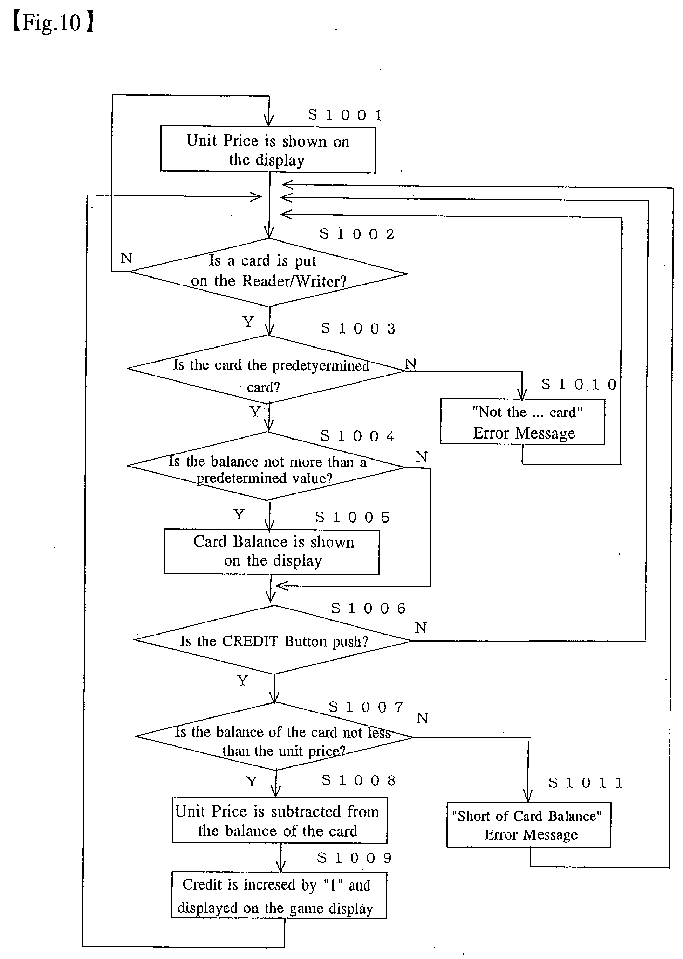

Fig. 10 is a flowchart showing the seventh embodiment of the game system according to the present invention. Similar or corresponding portions to those in the second embodiment are designated by the same references and descriptions thereof are omitted.

According to the seventh embodiment, the balance of the electronic money higher than a predetermined price is not shown at the electronic money terminal including the electronic money storage medium detecting means 607.

In Fig. 10, the processing of the electronic money terminal is executed by the following steps according to the seventh embodiment.

Step S1001: First, the unit price of the game is shown on the display portion 604, with preparing for inserting of the electronic money storage medium EDY into the insert space 601. In the step S1002, it is judged whether the electronic money storage medium EDY is inserted into the insert space 601 or not.

Step S1002: .It is judged whether the electronic money storage medium EDY is inserted into the insert space 601 or not. If the electronic money storage medium EDY is inserted, the processing is advanced to the step S1003, otherwise, returned to the step S1001.

Step S1003: The electronic money storage medium EDY is read by the reader/writer means 401 for judging whether the electronic money storage medium EDY is the predetermined card or not. If the electronic money storage medium EDY is the predetermined card, the processing is advanced to the step S 1004, otherwise, to the step S1010.

Step S1004: It is judged whether the balance of the electronic money storage medium EDY is not more than a predetermined value or not. If the balance is not more than the predetermined value, the processing is advanced to the step S1005, otherwise, jumped to the step S1006.

Step S1005: When the balance of the electronic money is not more than the predetermined value, the balance is automatically shown on the display portion 604 and the processing is advanced to the step S1006.

Step S1006: It is judged whether the credit button 602 is push or not. If the credit button 602 is push, the processing is advanced to the step S1007, otherwise, returned to the step S 1002.

Step S1007: It is judged whether the balance of the electronic money is not less than or less than the unit price of the game. If the balance is not less than the unit price, the processing is advanced to the step S1008, otherwise, to the step S810.

Step S1008: A command is given to the electronic money unit EDYU1 to deduct the unit price from the balance. Then the processing is advanced to the step S1009.

Step S1009: The credit is increased by one for playing the game once, and this is shown on the game display. Then, the processing is returned to the step S 1002.

Step S1010: When the electronic money storage medium EDY is judged in the step S1003 to be not the predetermined card, an error " Not the ....Card!" is shown. Then the processing is returned to the step S1002.

Step S1011: When the balance is judged in the step S1007 to be less than the unit price, an error "Short of Card Balance" is shown. Then the processing is returned to the step S1002.

According to the seventh embodiment, high price balance is prevented from leakage to another person. High safety is secured against a robbery.

### Eighth Embodiment

Next, the eighth embodiment of the game system according to the present invention is described with reference to the drawings.

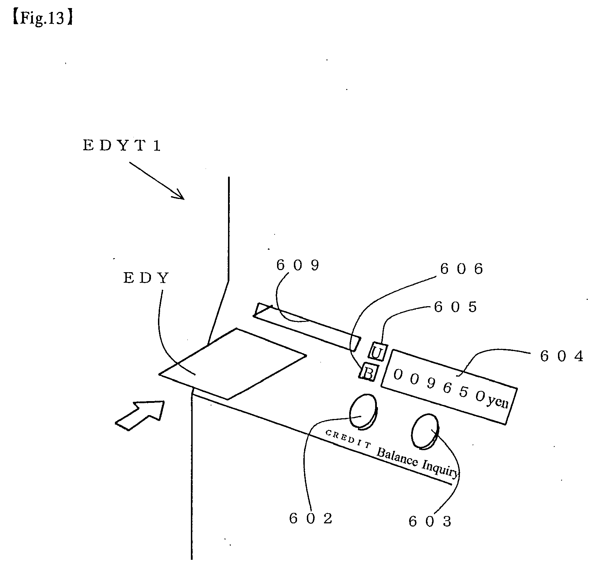

Fig. 13 is a perspective view showing the electronic money terminal of the eighth embodiment of the game system according to the present invention. Similar or corresponding portions to those in the first embodiment are designated by the same references and descriptions thereof are omitted.

In the eighth embodiment, the insert space of the first embodiment is substituted by a slit into which the electronic money storage medium is inserted.

In Fig. 13, the electronic money terminal EDYT1 is provided with a slit 609 for inserting the electronic money storage medium EDY. A drawing out restricting means (not shown) is provided in the slit 609 so that drawing out of the electronic money storage medium EDY is restricted.

When the player US inserts the electronic money storage medium EDY into the slit 609, the drawing out of the electronic money storage medium EDY is restricted. During the electronic money terminal EDYT1 executes the processing, it is impossible for another person from outside of the electronic money terminal EDYT1 to draw the electronic money storage medium EDY. Therefore, the robbery damage of the electronic money storage medium EDY is prevented.

The drawing out restricting means may be of various mode, that is, a means for pulling the electronic money storage medium EDY into the electronic money terminal EDYT, a means for locking up the electronic money storage medium EDY within the electronic money terminal EDYT, a means for guarding the electronic money EDY by a shutter etc. and so forth.

The electronic money storage medium EDY is positioned at a predetermined position relative to the reader/ writer means 401, so a good communication condition with the reader/ writer means 401 is secured.

### Ninth Embodiment

Next, the ninth embodiment of the game system according to the present invention is described with reference to the drawings.

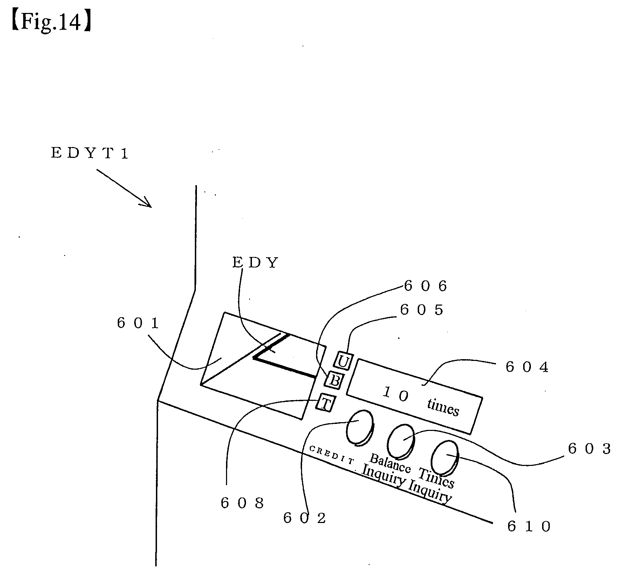

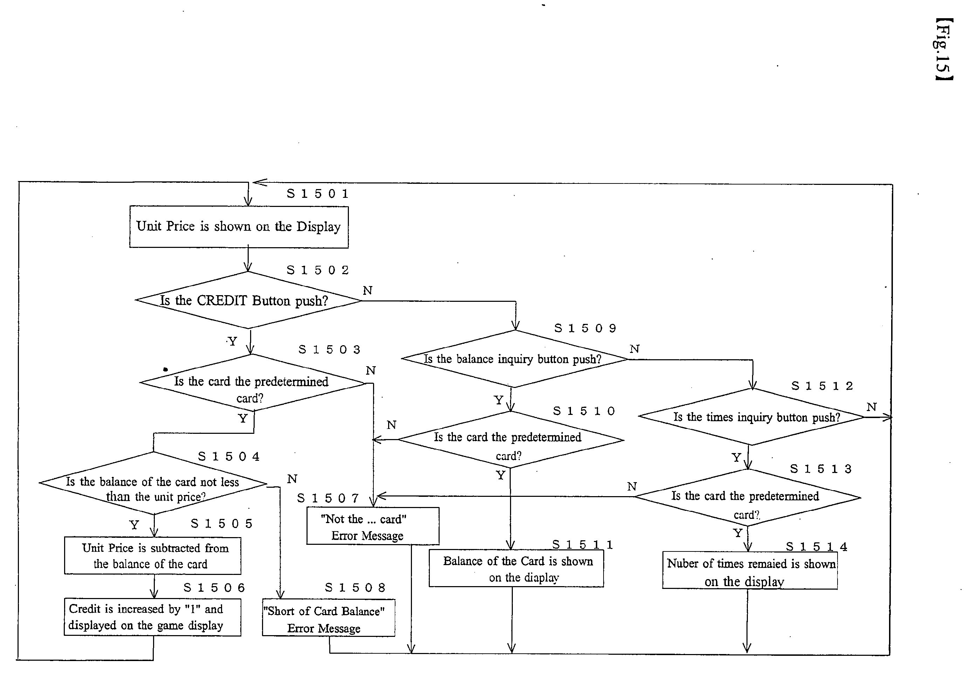

Fig. 14 is a perspective view showing the electronic money terminal of the ninth embodiment of the game system according to the present invention. Fig. 15 is a flowchart showing the processing of the electronic money terminal in Fig. 14. Similar or corresponding portions to those in the first embodiment are designated by the same references and descriptions thereof are omitted.

According to the ninth embodiment, a number of times inquiry button is added to the user interface of the first embodiment.

The electronic money terminal EDYT1 is provided with a number of times inquiry button 610 and a number of times lamp 608 adjacent to the insert space 601 in addition to the credit button 602, balance inquiry button 603, display portion 604, unit price lamp 605 and balance lamp 606.

When the player US inquires how many times the game can be executed by the balance of the electronic money storage medium EDY, the electronic money storage medium EDY is inserted into the insert space 601 after the number of times inquiry button 610.

The electronic money terminal EDYT1 reads the electronic money storage medium EDY by the reader/ writer means 401, obtains the balance, divides the balance by the unit price of the game and displays how many times the game can be executed. At this time, the number of times lamp 608 light for indicating a kind of the displayed data.

Since the number of times button 610 is push first also for inquiring the number of times, the transaction is lightened.

Various display manner can be applied such as display of just a numeral display, "....times", "....credits" etc.

In Fig. 15, the processing of the electronic money terminal EDYT1 is executed by the following steps.

Step S1501: First, the unit price of the game is shown on the display portion 604, with preparing for push of the credit button 602, the balance inquiry button 603 or the number of times inquiry button 610. The push of the credit button 602, balance inquiry button 603 and number of times inquiry button 610 are judged, in the steps S1502, S1509 and S 1512, respectively.

Step S 1502: It is judged whether the credit button 602 is pushed or not. If the credit button is push, the processing is advanced to the step S 1503, otherwise, to the step S1509.

Step S 1503: The electronic money storage medium EDY is read by the reader/writer means 401 for judging the electronic money storage medium EDY is a predetermined card or not. If the electronic money storage medium EDY is the predetermined card, the processing is advanced to the step S 1504, otherwise, to the step S1507.

Step S 1504: It is judged whether the balance of the electronic money is not less than or less than the unit price of the game. If the balance is not less than the unit price, the processing is advanced to the step S 1505, otherwise, to the step S 1508.

Step S1505: A command is given to the electronic money unit EDYU1 to deduct the unit price from the balance. Then the processing is advanced to the step S 1506.

Step S1506: The credit is increased by one for playing the game once, and this is shown on the game display. Then, the processing is returned to the step S1501.

Step S1507: When the electronic money storage medium EDY is judged in the step S 1503 to be not the predetermined card, an error " Not the ....Card!" is shown. Then the processing is returned to the step S 1501.

Step S1508: When the balance is judged in the step S1504 to be less than the unit price, an error "Short of Card Balance" is shown. Then the processing is returned to the step S1501.

Step S 1509: It is judged whether the balance inquiry button 603 is push or not. If the balance inquiry button 603 is push, the processing is advanced to the step S 1510, otherwise, to the step S1512.

Step S1510: The electronic money storage medium EDY is read by the reader/writer means 401 for judging the electronic money storage medium EDY is a predetermined card or not. If the electronic money storage medium EDY is the predetermined card, the processing is advanced to the step S1511, otherwise, to the step 51507.

Step S 1511: The balance is shown on the display portion 604, and the processing is returned to the step S 1501.

Step S 1512: It is judged whether the number of times inquiry button 610 is push or not. If the number of times inquiry button 610 is push, the processing is advanced to the step S1513, otherwise, returned to the step S1501.

Step S 1513: The electronic money storage medium EDY is read by the reader/writer means 401 for judging the electronic money storage medium EDY is a predetermined card or not. If the electronic money storage medium EDY is the predetermined card, the processing is advanced to the step S 1514, otherwise, to the step S1507.

Step S 1514: The number of times is shown on the display portion 604, and the processing is returned to the step S 1501.

According to the ninth embodiment, since the will of the player US is confirmed by the credit button 602, balance inquiry button 603 and number of times inquiry button 610 concerning game execution, balance inquiry and number of times display, respectively. Therefore, unexpected deduction is prevented and the safety of the player is secured.

### Tenth Embodiment

Next, the tenth embodiment of the game system according to the present invention is described with reference to the drawings.

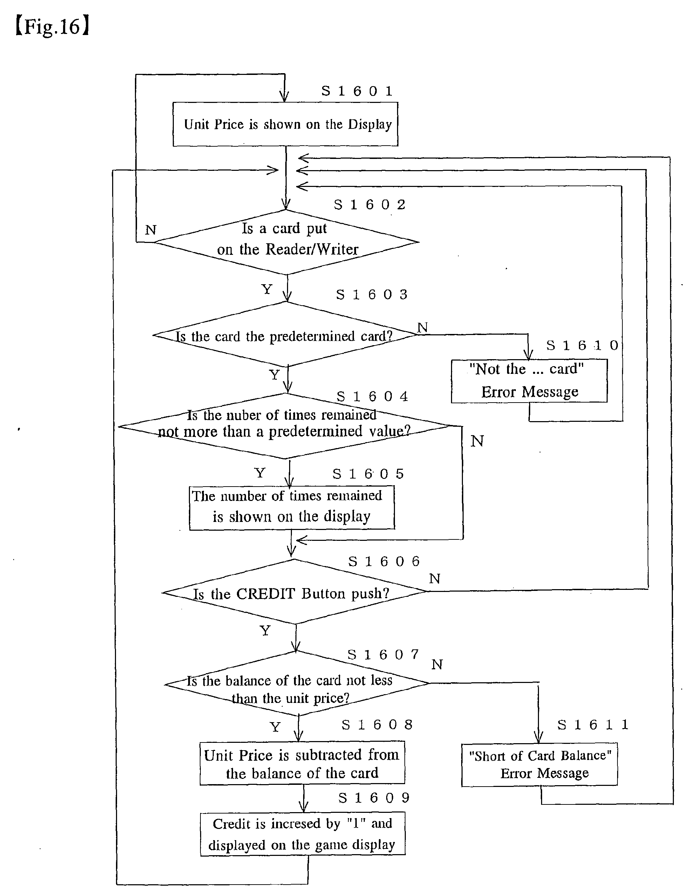

Fig. 16 is a flowchart showing the game system according to the present invention. Similar or corresponding portions to those in the seventh embodiment are designated by the same references and descriptions thereof are omitted.

According to the tenth embodiment, the number of times more than a predetermined number of times is not shown at the electronic money terminal including the electronic money storage medium detecting means 607.

In Fig. 16, the processing of the electronic money terminal is executed by the following steps.

Step S1601: First, the unit price of the game is shown on the display portion 604, with preparing for inserting of the electronic money storage medium EDY into the insert space 601.

Step S1602: .It is judged whether the electronic money storage medium EDY is inserted into the insert space 601 or not. If the electronic money storage medium EDY is inserted, the processing is advanced to the step S1603, otherwise, returned to the step S1601.

Step S1603: The electronic money storage medium EDY is read by the reader/writer means 401 for judging whether the electronic money storage medium EDY is the predetermined card or not. If the electronic money storage medium EDY is the predetermined card, the processing is advanced to the step S1604, otherwise, to the step S1610.

Step S1604: It is judged whether the number of executable times of the game by the electronic money memory medium EDY is not more than or more than a predetermined value. If the number of executable times is not more than the predetermined value, the processing is advanced to the step S1605, otherwise, jumped to the step S 1606.

Step S 1605: When the number of executable times of the game by the balance of the electronic money is not more than the predetermined value, the number of executable times is automatically shown on the display portion 604, and the processing is advanced to the step S1606.

Step S16006: It is judged whether the credit button 602 is push or not. If the credit button 602 is push, the processing is advanced to the step S1607, otherwise, returned to the step S1602.

Step S1607: It is judged whether the balance of the electronic money is not less than or less than the unit price of the game. If the balance is not less than the unit price, the processing is advanced to the step S1608, otherwise, to the step S1611.

Step S1608: A command is given to the electronic money unit EDYU1 to deduct the unit price from the balance. Then the processing is advanced to the step S1609.

Step S1609: The credit is increased by one for playing the game once, and this is shown on the game display.

Step S1610: When the electronic money storage medium EDY is judged in the step S1603 to be not the predetermined card, an error" Not the ....Card!" is shown. Then the processing is returned to the step S1602.

Step S1611: When the balance is judged in the step S 1607 to be less than the unit price, an error "Short of Card Balance" is shown. Then the processing is returned to the step S 1602.

According to the tenth embodiment, it is possible to prevent many number of times, that is, the balance of high price from leakage to another person. High safety is secured against a robbery.

### Industrial Applicability

The game program of the game machines from G1 to Gk in the above embodiments is stored in a ROM incorporated within the game machines, is installed from various memory media or is downloaded from various communication means.

The game machine is not limited to a special purpose game machine such as an arcade game or home game, and a general purpose computer may be applied to the game machine. The game program is installed on the general purpose computer. A reader/ writer means capable of communicating with the electronic money is connected to the general purpose computer. And a means for electronic money control and communicating which is capable of communicating with the electronic money control means for controlling the balance of the electronic money and of transmitting data of the electronic money read by the reader/ writer means to the electronic money control means is connected to the general purpose computer.
When a player starts a game of the game program on the general purpose computer using the electronic money, the general purpose computer may executes the execution recognition step. A step of executable notice is executed is executable for receiving the notice, that the game is executable using the electronic money, from the electronic money control means through the communication means with electronic money control means, after the execution recognition step. And game start control step is executed for starting the execution of the game, after the step of executable notice is executed.

The construction according to the present invention for preventing unexpected deduction of electronic money and for securing safety of a player is applicable not only to other electronic money applications but also widely to card authentication apparatuses of cashless society. The construction is the most suitable for the present state with sudden increase of crime.

### Brief Description of Drawings

Fig. 1 is a block diagram showing the first embodiment of the game system according to the present invention.(1^{st} Embodiment)
Fig. 2 is a block diagram showing the third embodiment of the game system according to the present invention. (3^{rd} Embodiment)
Fig. 3 is a block diagram showing the fourth embodiment of the game system according to the present invention. (4^{th} Embodiment)
Fig. 4 is a block diagram showing a electronic money unit in Fig. 1. (1^{st} Embodiment)
Fig. 5 is a block diagram showing another construction of the electronic money terminals in Fig. 1. (5^{th} Embodiment)
Fig. 6 is a perspective view showing a electronic money terminal in Fig. 1. (1^{st} Embodiment)
Fig. 7 is a flowchart showing a processing of the electronic money terminal in Fig. 1. (1^{st} Embodiment)
Fig. 8 is a flowchart showing a processing of the electronic money terminal in the second embodiment of the game system according to the present invention. (2^{nd} Embodiment)
Fig. 9 is a flowchart showing the sixth embodiment of the game system according to the present invention. (6^{th} Embodiment)
Fig. 10 is a flowchart showing the seventh embodiment of the game system according to the present invention. (7^{th} Embodiment)

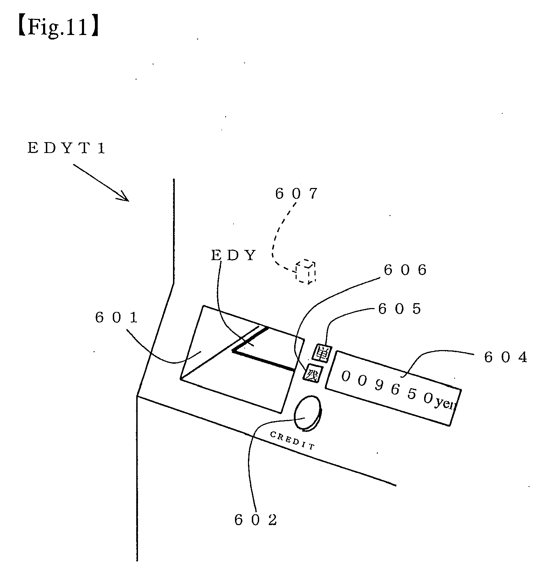

Fig. 11 is a perspective view showing another electronic money terminal in Fig. 1. (2^{nd} Embodiment)
Fig. 12 is an elevation view showing positional relationship between the electronic money terminal and the player. (1^{st} Embodiment)
Fig. 13 is a perspective view showing the electronic money terminal of the eighth embodiment of the game system according to the present invention. (8^{th} Embodiment)
Fig. 14 is a perspective view showing the electronic money terminal of the ninth embodiment of the game system according to the present invention. (9^{th} Embodiment)
Fig. 15 is a flowchart showing the processing of the electronic money terminal in Fig. 14. (9^{th} Embodiment)
Fig. 16 is a flowchart showing the processing of the electronic money terminal in the tenth embodiment of the game system according to the present invention. (10^{th} Embodiment)

### Explanation of Letters or Numerals

- 401: Reader/ Writer Means
- 404: Terminal Board
- 601: Insert Space
- 602: Credit Button
- 603: Balance Inquiry Button
- 604: Display Portion
- 606: Balance Button
- 607: Electronic Money Memory Medium Detecting Means
- 609: Slit
- 610: Number of Times Inquiry Button
- EDY: Electronic Money
- EDYT1: to EDYTk, EDYT11 to EDYT1k, EDYT21 to EDYTj, EDYTn 1 to
- EDYTnm: Electronic Money Terminal
- EDYU1: Electronic Money Unit
- EDYMElectronic: Money Control Means
- N, N1, N2: Network
- G1 to Gk: Game Machine
- GC1: Store Server
- GM: Game Control Means

## Claims

1. A game system comprising:
A game machine for executing a game;
An electronic money control means for controlling a balance of electronic moneys;
An electronic money terminal comprising a reader/ writer means capable of communicating with a electronic money storage medium storing information of said electronic money and an execution recognition means operated by a player when said player starts said game on said game machine using said electronic money;
A communication means with electronic money control means capable of communicating with said electronic money control means, which is capable of ciphering said information of said electronic money read by said reader/ writer means and transmitting said ciphered information to said electronic money control means; and
A game start control means for starting execution of said game;
wherein said electronic money control mans informs said balance of said electronic money through said communication means with electronic money control means to said game start control means when said electronic money control means receives said information of said electronic money from said communication means with electronic money control means, and
said game start control means starts game execution when said player operates said execution recognition means and said balance informed from said electronic money control means is not less than a unit price of said game.

2. A game system according to Claim 1 **characterized in that** said electronic money terminal comprises a space into which said electronic storage medium is inserted.

3. A game system according to Claim 1 **characterized in that** said electronic money terminal comprises:
A slit into which said electronic storage medium is inserted; and
A drawing out restricting means restricts drawing out of said electronic money storage medium during a period from said electronic money storage medium is inserted into said slit to said game is terminated and permits drawing out of said electronic money storage medium.

4. A game system according to one of Claims from 1 to 3 **characterized in that** said reader/ writer means starts communication with said electronic money storage medium after said execution recognition means is operated.

5. A game system according to one of Claims 1 to 4 **characterized in that** said electronic money terminal comprises an electronic money storage medium detecting means for detecting said electronic money storage medium existing at a predetermined position relative o said reader/ writer mans and that said reader/ writer means starts communication with said electronic money storage medium after said electronic money storage medium is detected by said electronic money storage medium detecting means.

6. A game system according to on of Claims 1 to 5 **characterized in that** said communication means with electronic money control means and said game start control means are provided one for a plurality of said electronic money terminals and that a switch means is further provided for connecting selectively one of said electronic money terminals to said communication means with electronic money control means and said game start control means.

7. A game system according to one of Claims from 1 to 6 **characterized in that** a balance inquiry confirmation mean which operated by said player when said player tries to inquire said balance of said electronic money is provided, and that said balance is displayed during a period when said player operates said balance inquiry confirmation means.

8. A game system according to one of Claims 5 to 7 **characterized in that** said electronic money terminal comprises a display means capable of displaying said balance of said electronic money after said electronic money storage medium is detected by said electronic money storage medium detecting means and that said display means displays said balance only when said balance is not more than a predetermined value.

9. A game system according to one of Claims 5 to 8 **characterized in that** a electronic money terminal control means is further provided connected with said plurality of communication means with electronic money control means and that said electronic money terminal control means integrates and handles information concerning said electronic money informed through said communication means with electronic money control means.

10. A game machine comprising:
A reader/ writer means capable of communicating with a electronic money storage medium storing information of said electronic money;
A communication means with electronic money control means capable of communicating with said electronic money control means, which is capable of transmitting said information to said electronic money control means;
An execution recognition means operated by a player when he starts said game on said game machine by said electronic money; and
A game start control means for starting execution of said game,
wherein said electronic money control mans informs said balance of said electronic money through said communication means with electronic money control means to said game start control means when said electronic money control man receives said information of said electronic money from said communication means with electronic money control means, and
said game start control means starts game execution when said player operates said execution recognition means and said balance informed from said electronic money control means is not less than a unit price of said game.

11. A game program including program codes executable by an information processing apparatus connected to a reader/ writer means capable of communicating with a electronic money storage medium storing information of said electronic money, to a communication means with electronic money control means capable of communicating with said electronic money control means, which is capable of transmitting said information to said electronic money control means, and to a game start control means, comprising:
A execution recognition step operated by a player when said player starts a game on said game machine using an electronic game;
A communication step of informing a balance of said electronic money through said communication means with electronic money control means to said game start control means when said communication means with electronic money control means capable of communicating with said electronic money control means; and
A step of starting to execute said game by said game start control means when said player operates said execution recognition means and said balance is not less than a unit price of said game.

12. A memory medium readable by said information processing apparatus in which said game program according to Claim 11 is stored.

## Amended claims

### Amended claims under Art. 19.1 PCT

1. A game system comprising:
A game machine established in a store for executing a game using an electronic money;
An electronic money terminal control means for controlling usage of said game machine and execution record of said game on said game machine using electronic moneys;
A game control means for integrating record of said electronic money terminal control means in a plurality of said stores;
An electronic money control means for controlling a usage record of said electronic moneys;
An electronic money terminal comprising a reader/ writer means capable of communicating with an electronic money storage medium which stores information of said electronic money and an execution recognition means operated by a player when said player starts said game on said game machine using said electronic money;
A communication means with electronic money control means for communicating with said electronic money control means and for transmitting said information of said electronic money read by said reader/ writer means to said electronic money control means; and
A game start control means for starting execution of said game, which starts game execution when said game start control means receives a communication of a balance of said electronic money storage medium from said communication means with electronic money control means, said player operates said execution recognition means and said balance is not less than a unit price of said game.

2. A game system according to Claim 1 **characterized in that** said electronic money terminal comprises a space into which said electronic storage medium is inserted.

3. A game system according to Claim 1 **characterized in that** said electronic money terminal comprises:
A slit into which said electronic storage medium is inserted; and
A drawing out restricting means restricts drawing out of said electronic money storage medium during a period from said electronic money storage medium is inserted into said slit to said game is terminated and permits drawing out of said electronic money storage medium.

4. A game system according to one of Claims from 1 to 3 **characterized in that** said reader/writer means starts communication with said electronic money storage medium after said execution recognition means is operated.

5. A game system according to one of Claims 1 to 4 **characterized in that** said electronic money terminal comprises an electronic money storage medium detecting means for detecting said electronic money storage medium existing at a predetermined position relative o said reader/writer mans and that said reader/writer means starts communication with said electronic money storage medium after said electronic money storage medium is detected by said electronic money storage medium detecting means.

6. A game system according to on of Claims 1 to 5 **characterized in that** said communication means with electronic money control means and said game start control means are provided one for a plurality of said electronic money terminals and that a switch means is further provided for connecting selectively one of said electronic money terminals to said communication means with electronic money control means and said game start control means.

7. A game system according to one of Claims from 1 to 6 **characterized in that** a balance inquiry confirmation mean which operated by said player when said player tries to inquire said balance of said electronic money is provided, and that said balance is displayed during a period when said player operates said balance inquiry confirmation means.

8. A game system according to one of Claims from 1 to 7 **characterized in that** said electronic money terminal further comprises a display means for displaying a unit price of said game and a balance of said electronic money storage medium.

9. A game system according to one of Claim 8 **characterized in that** said electronic money terminal automatically displays said balance only when said balance is not more than a predetermined value, after said electronic money storage medium is detected by said electronic money storage medium detecting mean.

10. A game machine comprising:
A reader/ writer means capable of communicating with a electronic money storage medium storing information of said electronic money;
A communication means with electronic money control means capable of communicating with said electronic money control means, which is capable of transmitting said information to said electronic money control means;
An execution recognition means operated by a player when he starts said game on said game machine by said electronic money; and
A game start control means for starting execution of said game,
wherein said electronic money control mans informs said balance of said electronic money through said communication means with electronic money control means to said game start control means when said electronic money control man receives said information of said electronic money from said communication means with electronic money control means, and
said game start control means starts game execution when said player operates said execution recognition means and said balance informed from said electronic money control means is not less than a unit price of said game.

11. A game program including program codes executable by an information processing apparatus connected to a reader/ writer means capable of communicating with a electronic money storage medium storing information of said electronic money, to a communication means with electronic money control means capable of communicating with said electronic money control means, which is capable of transmitting said information to said electronic money control means, and to a game start control means, comprising:
A execution recognition step operated by a player when said player starts a game on said game machine using an electronic game;
A communication step of informing a balance of said electronic money through said communication means with electronic money control means to said game start control means when said communication means with electronic money control means capable of communicating with said electronic money control means; and
A step of starting to execute said game by said game start control means when said player operates said execution recognition means and said balance is not less than a unit price of said game.

12. A memory medium readable by said information processing apparatus in which said game program according to Claim 11 is stored.

Statement under Art. 19.1 PCT
The following amendment is made in Claim 1:
In addition to the "electronic money control means", the "electronic money terminal control means" (corresponding to the store server GC 1 shown in the paragraph "0025") described in Claim 9 is added. An effect is clarified that a executing record of game using the electronic money can be controlled and integrated at the electronic money terminal control means.
The "game control means" in the paragraph "0025" is added. An effect that data of the electronic money terminal control means can be integrated for a plurality of stores. This effect is clearly described in the paragraph "0087".
It is clarified that the information of the electronic money transmitted from the "communication means with electronic money control means" to the "electronic money control means" is read from the "electronic money storage medium".
An effect of Claim 1 is clarified by the above amendment that the player's will is confirmed by execution recognition means in the game system, which does not directly control the game execution record using electronic money by the electronic money control means, but handles the record by the electronic money control means after the record is once integrated by the "electronic money terminal control means".

Claim 9 is deleted because it is included in Claim 1.

New Claim 9 is prepared of a characteristic that the electronic money terminal automatically displays said balance only when the balance is not more than a predetermined value, after the electronic money storage medium is detected by the electronic money storage medium detecting mean.
